# EUROPÄISCHE PATENTANMELDUNG

(11) **EP 3 968 291 A1**
(43) Veröffentlichungstag der Anmeldung: **16.03.2022**
(21) Anmeldenummer: 21194316.2
(22) Anmeldetag: 01.09.2021
(51) Int. Cl.: G07C 9/00, G06F 21/31, G07C 9/22, G07C 9/25, G07C 9/27, H04L 9/08

(54) **VERFAHREN ZUR NUTZUNGSFREIGABE SOWIE FUNKTIONSFREIGABEEINRICHTUNG HIERZU**

(30) Priorität: 11.09.2020 DE 102020123756
(71) Anmelder: Astra Gesellschaft Für Asset Management MbH&Co. Kg, 30890 Barsinghausen (DE)
(72) Erfinder: Stobbe, Anatoli, 30890 Barsinghausen (DE); Möller, Stefan, 30952 Ronnenberg (DE)
(74) Vertreter: Gramm, Lins & Partner Patent- und Rechtsanwälte PartGmbB

(57) **Zusammenfassung**

Ein Verfahren zur Nutzungsfreigabe von Funktionen mindestens einer dezentralen Datenempfangseinheit (1) für einen Nutzer mittels einer zentralen Datenverarbeitungseinheit (7) und der mindestens einen ausgewählten dezentralen Datenempfangseinheit (1) wird beschrieben. Die dezentrale Datenempfangseinheit (1) ist zum Empfangen eines verschlüsselten Freigabe-Datensatzes von einem Nutzer und zur Nutzungsfreigabe bei Übereinstimmung von mindestens einem in dem Freigabe-Datensatz enthaltenen Sicherheitsmerkmal mit jeweils einem entsprechenden, in der dezentralen Datenempfangseinheit (1) abgespeicherten Freigabekriterium eingerichtet. Das Verfahren hat die Schritte:
a) Erzeugen eines Freigabe-Datensatzes durch Verschlüsseln mindestens eines Freigabekriteriums durch die zentrale Datenverarbeitungseinheit (7) mit einem der zentralen Datenverarbeitungseinheit (7) und der ausgewählten dezentralen Datenempfangseinheit (1) bekannten Freigabeschlüssel sowie einem der zentralen Datenverarbeitungseinheit (7) bekannten individuellem Sicherheitsmerkmal des Nutzers;
b) Übertragen des verschlüsselten Freigabe-Datensatzes von der zentralen Datenverarbeitungseinheit (7) an das mobile Endgerät (4);
c) Übertragen des Freigabe-Datensatzes vom mobilen Endgerät (4) an die ausgewählte dezentrale Datenempfangseinheit (1) zusammen mit einem individuellen Sicherheitsmerkmal des Nutzers;
d) Entschlüsseln des mit der Kombination aus Freigabeschlüssel und individuellem Sicherheitsmerkmal verschlüsselten Freigabe-Datensatzes in der ausgewählten dezentralen Datenempfangseinheit (1);
e) Freigeben der Nutzung einer Funktion bei erfolgreicher Überprüfung des im entschlüsselten Freigabe-Datensatz enthaltenen Freigabekriteriums.

## Beschreibung

Die Erfindung betrifft ein Verfahren zur Nutzungsfreigabe von Funktionen mindestens einer dezentralen Datenempfangseinheit für einen Nutzer mittels einer zentralen Datenverarbeitungseinheit und der mindestens einen ausgewählten dezentralen Datenempfangseinheit, wobei die dezentrale Datenempfangseinheit zum Empfangen eines verschlüsselten Freigabe-Datensatzes von einem Nutzer und zur Nutzungsfreigabe bei Übereinstimmung von mindestens einem in dem Freigabe-Datensatzes enthaltenen Freigabekriterium mit jeweils einem entsprechenden, in der dezentralen Datenempfangseinheit abgespeicherten Freigabekriterium eingerichtet ist.

Die Erfindung betrifft weiterhin eine Funktionsfreigabeeinrichtung mit einer zentralen Datenverarbeitungseinheit, mit einem Computerprogramm zur Ausführung auf einem mobilen Endgerät und mit einer dezentralen Datenempfangseinheit.

Zur Nutzungsfreigabe von Funktionen sind beispielsweise elektronische Schlösser bekannt, die den Zugang zu einem kontrollierten Raumbereich (z.B. Gebäudebereiche, Zimmer, Schränke, Fahrzeuginnenräume etc.) freigeben. Diese sind zur mechanischen Freigabe nach einer vorhergehenden Überprüfung der Zutrittsberechtigung eingerichtet. Hierzu kann ein individueller Freigabe-Datensatz drahtlos von einem mobilen Endgerät an die dezentrale Schließeinheit übertragen werden. Der Freigabe-Datensatz ist dabei derart verschlüsselt, dass dieser beim Transport zur dezentralen Schließeinheit nicht gelesen werden kann.

Hierzu kann der Freigabe-Datensatz auf einer Transponderkarte fest und unzugänglich abgespeichert werden.

Bei einer Nutzungsfreigabe mit Hilfe eines mobilen Endgerätes, das per se unsicher ist, muss über die Übertragung des Freigabe-Datensatzes an eine dezentrale Datenempfangseinheit hinaus ein zusätzlicher Sicherheitsmechanismus vorgesehen werden, der einen Missbrauch des Freigabe-Datensatzes ausschließt.

DE 29 01 521 A1 offenbart ein persönliches Identifizierungssystem, bei dem eine persönliche Identifizierungsnummer zusammen mit einer geheimen Prüfzahl als erster Schlüssel verwendet wird. Eine zweite Verschlüsselung wird aus einem vorbestimmten Verhältnis zur ersten Schlüssel zusammengesetzt.

DE 10 2016 002 792 A1 beschreibt ein Biometrie-Geheimnis-Bildungsschema mit verbessertem Datenschutz, um persönliche Daten in nicht vertrauenswürdigen Rechnerumgebungen abzuspeichern. Es wird eine auf einem biometrischen Merkmal basierende Zählerdatenerzeugung für eine Standardverschlüsselung genutzt, wobei ein Geheimnis eines Individuums mit den biometrischen Daten des Indivisuums verbunden wird, um ein überprüfbares biometrisches Template zur Verwendung bei der Authentifizierung der Identität zu erzeugen.

US 2018/0061155 A1 beschreibt ein Verfahren und ein System für die Zugangskontrolle, bei dem Zugangsdetails des Gebäudes von einem in der Nähe des Gebäudes befindlichen Mobilgerät an das Gebäude zur ersten Authentifizierung übertragen werden. Nach erfolgreicher erster Authentifizierung wird eine Anforderung zur biometrischen Identifizierung eines Nutzers an das Mobilgerät übertragen. Die biometrischen Daten werden dann vom Mobilgerät an einen zentralen Server übertragen und in einem zweiten Authentifizierungsprozess überprüft. Bei positiver Prüfung wird der Zugang des Gebäudes freigegeben.

DE 10 2016 117 981 A1 offenbart eine Vorrichtung und ein Verfahren zur Auswertung von Zugangsinformationen mit einem geschützt angeordneten Auswerte- und Steuergerät und einem damit verbundenen Türentriegelungsgerät sowie einem Eingabegerät, das mit dem Auswerte- und Steuergerät verbunden ist. Mittels der über das Eingabegerät zugeführten verschlüsselten Zugangsdaten wird nach Auswertung und erfolgreicher Prüfung derselben auf Zugangsgewährung das Türentriegelungsgerät zur Entriegelung der Zugangstür angesteuert. Die eine veränderliche Zeitangabe enthaltene verschlüsselte Information wird hierzu von der Auswerte- und Steuereinheit entschlüsselt und ausgewertet.

DE 10 2014 105 243 A1 offenbart ein Zugangskontrollsystem, bei dem eine Zugangsberechtigungsinformation an eine Zugangskontrollvorrichtung kommuniziert wird. Die mit einem ersten Schlüssel erzeugte Zugangsberechtigungsinformation umfasst Zugangsberechtigungsparameter und eine erste Prüfinformation. Anhand des in der Zugangskontrollvorrichtung gespeicherten zweiten Schlüssels wird geprüft, ob die kommunizierte erste Prüfinformation durch Durchführung kryptographischer Operationen unter Verwendung des ersten Schlüssels des Schlüsselpaares erzeugt wurde. Der Zugang wird gewährt, wenn das genannte Prüfen ein positives Ergebnis liefert und eine Menge der kommunizierten Zugangsberechtigungsparameter hinsichtlich der zum Prüfzeitpunkt geltenden Bezugsinformationen zum Zugang berechtigen.

Ausgehend hiervon ist es Aufgabe der vorliegenden Erfindung, ein verbessertes Verfahren zur Nutzungsfreigabe von Funktionen sowie eine hierzu ausgebildete Funktionsfreigabeeinrichtung, ein Computerprogramm und eine dezentrale Datenempfangseinheit zu schaffen.

Die Aufgabe wird durch das Verfahren mit den Merkmalen des Anspruchs 1, die Funktionsfreigabeeinrichtung mit den Merkmalen des Anspruchs 12, das Computerprogramm mit den Merkmalen des Anspruchs 13 und 14 und die dezentrale Datenempfangseinheit mit den Merkmalen des Anspruchs 15 gelöst. Vorteilhafte Ausführungsformen sind in den Unteransprüchen beschrieben.

Es wird vorgeschlagen, dass das Verfahren zur Nutzungsfreigabe von Funktionen mindestens einer dezentralen Datenempfangseinheit für einen Nutzer mittels einer zentralen Datenverarbeitungseinheit und der mindestens einen ausgewählten dezentralen Datenempfangseinheit folgende Schritte aufweist:
a) Erzeugen eines Freigabe-Datensatzes durch Verschlüsseln mindestens eines Freigabekriteriums unter Berücksichtigung mindestens eines individuellen Sicherheitsmerkmals durch die zentrale Datenverarbeitungseinheit mit einem der zentralen Datenverarbeitungseinheit und der ausgewählten dezentralen Datenempfangseinheit bekannten Freigabeschlüssel sowie einem der zentralen Datenverarbeitungseinheit bekannten individuellen Sicherheitsmerkmal des Nutzers;
b) Übertragen des verschlüsselten Freigabe-Datensatzes von der zentralen Datenverarbeitungseinheit an das mobile Endgerät;
c) Übertragen des Freigabe-Datensatzes vom mobilen Endgerät an die ausgewählte dezentrale Datenempfangseinheit zusammen mit mindestens einem individuellen Sicherheitsmerkmal des Nutzers;
d) Entschlüsseln des mit der Kombination aus Freigabeschlüssel und individuellem Sicherheitsmerkmal verschlüsselten Freigabe-Datensatzes in der dezentralen Datenempfangseinheit;
e) Freigeben der Nutzung einer Funktion bei erfolgreicher Überprüfung des im entschlüsselten Freigabe-Datensatz enthaltenen Freigabekriteriums.

Hierzu ist die dezentrale Datenempfangseinheit zum Empfangen eines verschlüsselten Freigabe-Datensatzes von einem Nutzer und zur Nutzungsfreigabe bei Übereinstimmung von mindestens einem in dem Freigabe-Datensatz enthaltenen Freigabekriterium mit jeweils einem entsprechenden, in der dezentralen Datenempfangseinheit abgespeicherten Freigabekriterium eingerichtet.

Die Nutzungsfreigabe erfolgt durch ein Zusammenwirken eines (nur) der zentralen Datenverarbeitungseinheit und einer ausgewählten dezentralen Datenempfangseinheit bekannten Freigabeschlüssels unter Berücksichtigung mit mindestens einem individuellen Sicherheitsmerkmal. Dieses individuelle Sicherheitsmerkmal wird auf einem Weg der zentralen Datenverarbeitungseinheit und auf einem anderen Weg an eine ausgewählte Datenverarbeitungseinheit mitgeteilt. Diese Kombination aus Freigabeschlüssel und individuellem Sicherheitsmerkmal des Nutzers wird zur Verschlüsselung eines Freigabe-Datensatzes in der zentralen Datenverarbeitungseinheit und gleichermaßen zur Entschlüsselung in der ausgewählten Datenempfangseinheit genutzt. Damit lässt sich das mindestens eine in dem verschlüsselten Freigabe-Datensatz enthaltene Freigabekriterium nur dann auslesen, wenn sowohl das individuelle Sicherheitsmerkmal, als auch der nicht offen zur dezentralen Datenempfangseinheit übertragene Freigabeschlüssel bekannt ist.

Wenn nun ein Nutzer beispielsweise mit seinem mobilen Endgerät eine Freigabe einer Nutzung einer Funktion erlangen möchte, die einer ausgewählten dezentralen Datenempfangseinheit oder einer Schließgruppe dezentraler Datenempfangseinheiten zugeordnet ist, wird im sicheren Bereich der zentralen Datenverarbeitungseinheit das für die Nutzungsfreigabe einer ausgewählten Funktion vordefinierte Freigabekriterium mit Hilfe der Kombination aus individuellem Sicherheitsmerkmal und geheimen Freigabeschlüssel der dezentralen Datenempfangseinheit verschlüsselt.

Für die Verschlüsselung wird eine Kombination aus individuellem Sicherheitsmerkmal des Nutzers und dem Freigabeschlüssel der ausgewählten dezentralen Datenempfangseinheit genutzt. Der Freigabeschlüssel ist hierzu sowohl der zentralen Datenverarbeitungseinheit und der dezentralen Datenempfangseinheit bekannt, nicht aber dem Nutzer. Das individuelle Sicherheitsmerkmal des Nutzers wird hingegen auf einem ersten Weg der zentralen Datenverarbeitungseinheit und auf einem zweiten Weg der ausgewählten dezentralen Datenempfangseinheit mitgeteilt. Wenn der verschlüsselte Freigabe-Datensatz durch einen unberechtigten Dritten abgefangen wird, wird ein unberechtigtes Entschlüsseln und Nutzen sowohl durch die ausgewählte Datenempfangseinheit, dem der Freigabeschlüssel bekannt ist, als auch durch das nur dem Nutzer bekannte Sicherheitsmerkmal verhindert. Damit kann die Weiterleitung des verschlüsselten Freigabe-Datensatzes von der zentralen Datenverarbeitungseinheit über einen unsicheren Transportweg zu einer dezentralen Datenempfangseinheit erfolgen.

Nach dem Empfang des Freigabe-Datensatzes und mindestens eines individuellen Sicherheitsmerkmals des Nutzers in der dezentralen Datenempfangseinheit wird dieser dort mit dem aus der Kombination von individuellem Sicherheitsmerkmal und dem in der dezentralen Datenempfangseinheit abgesichert hinterlegten Freigabeschlüssel entschlüsselt. Damit ist die dezentrale Schließeinheit in ihrem sicheren Bereich in der Lage, die Zugangsberechtigung anhand des mit dem Freigabe-Datensatz übertragenen Freigabekriteriums mit einem jeweils entsprechenden vorgegebenen Freigabekriterium zu prüfen und bei einer positiven Überprüfung die angeforderte Nutzung einer Funktion freizugeben.

Das mindestens eine Freigabekriterium kann eine individuelle Nutzerkennung umfassen, die die Nutzung der angeforderten Funktion, wie z.B. bei einem elektronischen Schloss den Zutritt beschränkt. Diese individuelle Nutzerkennung kann in einer Freigabeliste der Datenempfangseinheit hinterlegt sein. Mit Hilfe dieser Liste wird dann die Nutzungsfreigabe anhand der Nutzerkennung durchgeführt.

Das mindestens eine Freigabekriterium kann eine Zeitinformation umfassen, die die Nutzung der angeforderten Funktion, wie z.B. bei einem elektronischen Schloss den Zutritt, auf einen vorgegebenen Zeitraum beschränkt. Damit kann beispielsweise der Gültigkeitszeitraum eines Freigabe-Datensatzes eingeschränkt werden. Die Missbrauchsgefahr wird damit weiter reduziert. Die Zeitinformation kann aber auch eine von der zentralen Datenverarbeitungseinheit vorgegebene Gültigkeitsdauer sein, in denen ein Nutzer eine Nutzungsfreigabe für eine Funktion erhält. Mit Hilfe eines solchen Zeitstempels kann eine zentrale Datenverarbeitungseinheit damit eine Nutzungsfreigabesteuerung in zeitlicher Hinsicht durchführen.

Das mindestens eine Freigabekriterium kann eine Ortsinformation umfassen, welche die Nutzungsfreigabe auf mindestens einen Ortsbereich beschränkt. Damit kann bspw. der Zutritt auf einen räumlich eingegrenzten Bereich beschränkt werden, wie z.B. auf ein Hotelzimmer oder einen Schrankfachs. Dies kann beispielsweise durch eine individuelle Nummer oder einen Nummernkreis von dezentralen Schließeinheiten (Schließgruppe) sein, für die der Nutzer mit Hilfe des Freigabe-Datensatzes eine Zutrittsberechtigung erhält. So kann beispielsweise bei der Überprüfung einer Zutrittsfreigabe durch eine dezentrale Schließeinheit von dieser überprüft werden, ob die Ortsinformation mit der Ortsinformation übereinstimmt, die der dezentralen Schließeinheit zugeordnet ist, wie beispielsweise eine individuelle Kennung der dezentralen Schließeinheit. Hierzu ist die dezentrale Datenempfangseinheit vorzugsweise ein Teil einer Schließgruppe, wobei die Ortsinformation mindestens eine Kennung für die der Schließgruppe zugeordnete dezentrale Schließeinheit beinhaltet.

Eine weitergehende Absicherung der Nutzungsfreigabe vor Missbrauch wird dadurch erreicht, wenn das in dem verschlüsselten Freigabe-Datensatz enthaltene mindestens eine Freigabemerkmal ein individuelles Sicherheitsmerkmal des Nutzers umfasst und das Freigeben der Nutzung einer Funktion im Schritt e) nur dann erfolgt, wenn das in dem Freigabe-Datensatz enthaltene individuelle Sicherheitsmerkmal mit dem im Schritt c) von dem Nutzer übertragenen individuellen Sicherheitsmerkmal übereinstimmt. Das zwischen dem Nutzer und der zentralen Datenverarbeitungseinheit vereinbarte individuelle Sicherheitsmerkmal des Nutzers wird von der zentralen Datenverarbeitungseinheit in dem Freigabe-Datensatz während der Verschlüsselung mit dem Freigabeschlüssel einbezogen. Zur Nutzungsfreigabe muss dieses individuelle Sicherheitsmerkmal vom anfordernden Nutzer an die dezentrale Datenempfangseinheit übertragen werden, wo sie nicht nur zur Entschlüsselung genutzt wird, sondern auch zur Überprüfung des im entschlüsselten Freigabedatensatz enthaltenen individuellen Freigabekriteriums. Wenn nun der Freigabe-Datensatz manipuliert oder "geknackt" wurde, lässt sich der Inhalt nur dann nutzen, wenn das in dem Freigabe-Datensatz enthaltene individuelle Sicherheitsmerkmal mit dem vom Nutzer an die dezentrale Datenempfangseinheit übertragenen individuellen Sicherheitsmerkmal übereinstimmt.

Das individuelle Sicherheitsmerkmal kann eine persönliche Identifikationsnummer (PIN) sein, die zum einen von Nutzer mit der zentralen Datenverarbeitungseinheit einzelfallbezogen oder generell abgestimmt wird und zum anderen zur Nutzungsfreigabe an die dezentrale Datenempfangseinheit übertragen wird. Hierzu kann im räumlichen Bereich der dezentralen Datenempfangseinheit eine Eingabetastatur vorhanden sein, um die persönliche Identifikationsnummer mit Hilfe eines Tastaturfeldes einzugeben. Denkbar ist aber auch, dass die persönliche Identifikationsnummer in ein mobiles Endgerät des Nutzers eingegeben und drahtlos an die sich in der Nähe befindliche dezentrale Datenempfangseinheit übertragen wird. Denkbar ist aber auch, dass das individuelle Sicherheitsmerkmal ein biometrischer Code ist, wie beispielsweise Papillarmuster der Finger (Minuzien) oder die Iris- oder Retinastruktur des Nutzers. Damit kann die Gefahr des Missbrauchs des individuellen Sicherheitsmerkmals weiter reduziert werden, das durch den biometrischen Code physisch an den Nutzer gebunden ist. Das individuelle Sicherheitsmerkmal kann für die einzelnen berechtigten Nutzer bei der zentralen Datenverarbeitungseinheit in dessen sicherem Bereich hinterlegt werden. Dann ist es nur dem Nutzer möglich, mit seinem nutzerindividuellen und damit einmaligen Sicherheitsmerkmal eine Nutzungsfreigabe zu erreichen. Dies reicht aber nicht aus, da zusätzlich noch der nur der zentralen Datenverarbeitungseinheit und der angeforderten dezentralen Datenempfangseinheit bekannte Freigabeschlüssel erforderlich ist.

Damit wird eine Authentifizierung mit mehreren Faktoren auf einfach zu handhabende Weise möglich.

Ein individuelles Sicherheitsmerkmal kann eine Identifikationsnummer des mobilen Endgerätes (IMEI) des Nutzers, eine Identifikationsnummer (IMSI) des Teilnehmer-Identitätsmoduls (SIM) des mobilen Endgerätes des Nutzers, die Telefonnummer des mobilen Endgerätes des Nutzers, die UID-Nummer des Teilnehmer-Identitätsmoduls (SIM) des Nutzers, die integrierte SIM-Karten-Identifizierer-Kennung (ICC-ID) des Teilnehmer-Identitätsmoduls (SIM) des Nutzers, eine Identifizierer-Kennung eines auf dem mobilen Endgerät zur Ausführung des Schritts d) ablaufenden Computerprogramms (IdentifierForVendor) oder eine Instanzen-Kennung (Instance ID) sein. Andere verfügbare individuelle Kennungen des mobilen Endgerätes sind entsprechend auch denkbar. Damit können vorzugsweise eineindeutige Kennungen des mobilen Endgerätes eines Nutzers als individuelles Sicherheitsmerkmal genutzt werden, welches zur Identifikation des berechtigten Nutzers eingesetzt wird.

Das Übertragen des Sicherheitsmerkmals vom mobilen Endgerät zur dezentralen Datenempfangseinheit kann durch Verschlüsselung mit Hilfe eines Transportschlüssels erfolgen. Dieser Schlüssel kann in der zentralen Datenverarbeitungseinheit erzeugt werden. Dabei kann der Transportschlüssel verschlüsselt mit dem Freigabeschlüssel und gleichzeitig unverschlüsselt zum mobilen Endgerät übertragen werden. Das individuelle Sicherheitsmerkmal wird dann mit dem unverschlüsselten Transportschlüssel verschlüsselt und an die dezentrale Datenempfangseinheit übermittelt. Die dezentrale Empfangseinheit kann dann den Transportschlüssel aus dem verschlüsselten Freigabe-Datensatz nutzen, nachdem der Freigabe-Datensatz mit Hilfe des Freigabeschlüssels entschlüsselt wurde, um das mindestens eine individuelle Sicherheitsmerkmal zu entschlüsseln und anschließend den Freigabe-Datensatz zu verifizieren.

Das Übertragen des Freigabe-Datensatzes an die ausgewählte dezentrale Datenempfangseinheit kann direkt erfolgen. Dies kann aber auch indirekt z.B. durch Speicherung des Freigabe-Datensatzes auf eine Nahfelddaten-Übertragungseinheit erfolgen. Die Nahfelddaten-Übertragungseinheit kann ein mobiles Endgerät, wie bspw. ein Smartphone, mit einer zur Durchführung des Verfahrens eingerichteten Softwareapplikation sein. Es kann sich aber auch um eine Transponderkarte handeln, die von einem Nahbereichs-Lesegerät der dezentralen Datenempfangseinheit drahtlos ausgelesen wird. Damit kann eine Rechteübertragung nicht nur an ein mobiles Endgerät des Nutzers, sondern auch an eine Transponderkarte oder ähnliches erfolgen, die dann einfacher zu handhaben ist.

Bei der Überprüfung der Nutzungsfreigabe kann nicht nur der von der zentralen Datenverarbeitungseinheit z.B. über ein mobiles Endgerät zur dezentralen Datenempfangseinheit übertragene Freigabe-Datensatz überprüft werden. Denkbar ist, dass zusätzlich noch die individuelle Kennung des mobilen Endgerätes überprüft wird, welche zunächst beim Anfordern einer Zugangsfreigabe von dem mobilen Endgerät an die zentrale Datenverarbeitungseinheit übertragen und dann an die dezentrale Datenempfangseinheit geleitet wurde. Damit wird noch sicherer verhindert, dass der Freigabe-Datensatz von einem Dritten missbraucht wird. Eine Nutzungsfreigabe setzt nämlich voraus, dass der Freigabe-Datensatz zuvor zusammen mit der individuellen Kennung des mobilen Endgerätes an die dezentrale Datenempfangseinheit geschickt wurde, welcher auch für das Anfordern des Freigabe-Datensatzes von dem mobilen Endgerät an die zentrale Datenverarbeitungseinheit genutzt wurde. Dadurch, dass zusätzlich eine mit einem mobilen Endgerät verknüpfte individuelle Kennung mit für die Freigabeüberprüfung genutzt wird, kann ein Missbrauch auf einfache Weise sicher ausgeschlossen werden.

Nachdem ein Freigabe-Datensatz eine Nutzungsfreigabe in der dezentralen Datenempfangseinheit ausgelöst hat, ist es vorteilhaft dieses Ereignis in einem Antwortdatensatz über das mobile Endgerät an die zentrale Datenverarbeitungseinheit zu übertragen und dort zu speichern. Damit ist es möglich zu Überprüfen ob eine Nutzungsfreigabe auch wirklich erfolgreich war. Auf dem entgegengesetzten Transportweg, der die gleichen Verschlüsselungsmechanismus verwendet wie der Weg von der zentralen Datenverarbeitungseinheit zur dezentralen Datenempfangseinheit, können auch weitere Statusinformationen, wie Störungen der Nutzung des Freigabedatensatzes, im Antwortdatensatz übertragen und zur späteren Fehlerbehebung in der zentralen Datenverarbeitungseinheit gespeichert werden.

Die Erfindung wird nachfolgend anhand der beigefügten Zeichnungen näher erläutert. Es zeigen:
- Figur 1 -: Skizze einer Funktionsfreigabeeinrichtung in Form einer Funktionsfreigabeeinrichtung;
- Figur 2 -: Skizze einer erweiterten Ausführungsform der Funktionsfreigabeeinrichtung;
- Figur 3 -: beispielhafte Datenstruktur eines Freigabe-Datensatzes mit darin enthaltenem verschlüsselten Freigabekriterien zur Nutzungsfreigabe für eine Funktion.
- Figur 4 -: beispielhafte Datenstruktur eines Antwort Datensatzes mit darin enthaltenem Informationen.

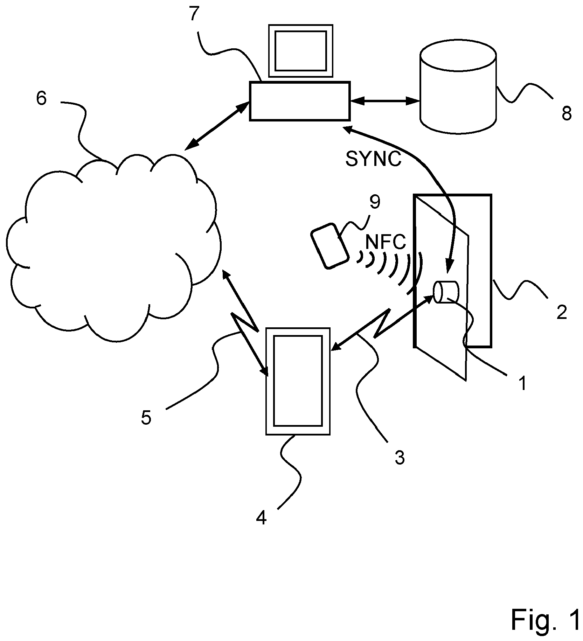

Figur 1 zeigt eine Skizze einer Funktionsfreigabeeinrichtung in Form einer Zutrittskontrolleinrichtung, die eine dezentrale Datenempfangseinheit 1 an einer Tür 2 hat. Die dezentrale Datenempfangseinheit 1 hat in dem Ausführungsbeispiel eine Schließeinheit mit einem Schloss zur Verriegelung und Entriegelung der Tür 2. Hierbei kann es sich um eine Tür 2 für einen Raum in einem Gebäude handeln. Es kann aber auch eine Tür eines Schließfaches oder eines sonstigen abgesicherten räumlichen Bereichs handeln. Denkbar ist aber auch, dass die dezentrale Datenempfangseinheit 1 eine elektronische Nutzungsfreigabeeinheit zur Nutzungsfreigabe wie beispielsweise für elektronische Geräte oder elektromechanische Geräte und dergleichen hat.

Zur Nutzungsfreigabe einer Funktion kann über einen drahtlosen Kommunikationskanal 3 von einem mobilen Endgerät 4 ein Freigabe-Datensatz an die dezentrale Schließeinheit 1 geschickt werden. Die dezentrale Datenempfangseinheit 1 ist beispielsweise mittels einer geeignet programmierbaren Recheneinheit eingerichtet, um den Freigabe-Datensatz mit Hilfe des Freigabeschlüssels, unter Berücksichtigung mindestens eines Sicherheitsmerkmals zu entschlüsseln und das in dem Freigabe-Datensatz enthaltene mindestens eine Freigabekriterium mit einem vorgegebenen Freigabekriterium zu vergleichen und in Abhängigkeit des Erfolgs dieser Überprüfung die angeforderte Nutzung einer Funktion, wie bspw. den Zutritt durch Öffnen eines elektro-mechanischen Schlosses, freizugeben.

Dies erfolgt allerdings nur dann, wenn der Freigabeschlüssel, mit dem der Freigabe-Datensatz verschlüsselt wurde, auch mit dem von der dezentralen Datenempfangseinheit 1 verwendeten Freigabeschlüssel übereinstimmt.

Der von dem mobilen Endgerät 4 eines Nutzers an die dezentrale Datenempfangseinheit 1 zur Nutzungsfreigabe einer Funktion übertragene Freigabe-Datensatz, welcher das mindestens eine Freigabekriterium enthält, liegt in einem verschlüsselten Format vor, das von dem mobilen Endgerät 4 und unbefugten Dritten selbst nicht entschlüsselt werden kann. Dieser Freigabe-Datensatz wurde auch nicht von dem mobilen Endgerät 4 erzeugt. Vielmehr erfordert die Nutzungsfreigabe einer Funktion zunächst eine Anforderung des Sicherheitsmerkmals zur Freigabe der gewünschten Funktion, die einer ausgewählten dezentralen Datenempfangseinheit 1 zugeordnet ist, von dem mobilen Endgerät 4 über einen Datenfunkkanal 5 und ein Datenübertragungsnetzwerk 6 an eine zentrale Datenverarbeitungseinheit 7. Diese ist zur Nutzungsfreigabesteuerung durch geeignete Programmierung ausgebildet und mit einem sicheren Datenspeicher 8 verbunden, in dem die Nutzungsberechtigungen verschiedener Nutzer für bestimmte Funktionen dezentraler Datenempfangseinheiten 1 vorgegeben sind.

Für die Funktionsnutzungsfreigabe wird ein Freigabe-Datensatz an das mobile Endgerät 4 von der zentralen Datenverarbeitungseinheit 7 übermittelt. Weiterhin wird zwischen dem Nutzer und der zentralen Datenverarbeitungseinheit ein individuelles Sicherheitsmerkmal des Nutzers vereinbart bzw. kommuniziert. Dies kann im Vorfeld einer spezifischen Freigabeanforderung z.B. bei Anmeldung eines Nutzerprofils erfolgen. Denkbar ist aber auch, dass der Nutzer mindestens ein individuelles Sicherheitsmerkmal zusammen mit der Freigabeanforderung an die zentrale Datenverarbeitungseinheit 7 übermittelt. Denkbar ist auch eine Kombination von generellem individuellem Sicherheitsmerkmal, das im Vorfeld vereinbart wurde, und aktuellem individuellem Sicherheitsmerkmal, das für eine jeweilige Funktionsnutzungsfreigabe vereinbart wird.

Der Freigabeschlüssel liegt in gesicherter Form bei der zentralen Datenverarbeitungseinheit 7 und der jeweiligen dezentralen Datenempfangseinheit 1 vor. Er ist nur diesen beiden Einheiten bekannt und wird auf einem gesicherten Kommunikationsweg SYNC einmalig ausgetauscht. Der Freigabeschlüssel kann ggf. im späteren Verlauf aktualisiert werden.

Somit ist in dem sicheren Datenspeicher 8 eine Liste mit Freigabeschlüsseln für Funktionen hinterlegt, die jeweils mindestens einer Datenempfangseinheit 1 zugeordnet sind.

Zur Rechteverwaltung werden einem Nutzer durch ein auf der zentralen Datenverarbeitungseinheit 7 ablaufendes Computerprogramm unter Zugriff auf die in dem sicheren Datenspeicher 8 hinterlegten Daten Nutzungsrechte für ausgewählte Funktionen zugewiesen. Hierzu wird mindestens ein Freigabekriterium generiert, das von einer dezentralen Datenempfangseinheit 1 ausgelesen und als Kriterium für die Nutzungsfreigabe einer der dezentralen Datenempfangseinheit 1 zugewiesenen Funktion genutzt werden kann. Ein solches Freigabekriterium kann eine Zeitinformation beinhalten, durch das die Nutzungsfreigabe einer Funktion auf die damit bestimmte Zeit (z.B. Startzeit oder Stoppzeit) bzw. einen Zeitraum beschränkt. Ein solches Freigabekriterium kann eine Ortsinformation enthalten, wie bspw. die Kennung einer dezentralen Datenempfangseinheit 1, um damit die Nutzung einer Funktion auf einen räumlich beschränkten Ortsbereich zu begrenzen.

Dieses mindestens eine Freigabekriterium wird nun in mindestens einen Freigabe-Datensatz gepackt und dort mit einem Freigabeschlüssel, unter Berücksichtigung des Sicherheitsmerkmals, vor unbefugter Nutzung geschützt. Damit kann der Freigabe-Datensatz als Transportpaket sicher von der zentralen Datenverarbeitungseinheit 7 übertragen werden. Nach Erhalt des mit dem Freigabeschlüssel verschlüsselten Freigabe-Datensatz im mobilen Endgerät 4 des Nutzers wird der Freigabe-Datensatz von dem mobilen Endgerät 4 unverändert über die drahtlose Kommunikationsverbindung an die ausgewählte dezentrale Datenempfangseinheit 1 übertragen. Zudem wird das mindestens eine individuelle Sicherheitsmerkmal von dem Nutzer bzw. seinem mobilen Endgerät 4 an die dezentrale Datenempfangseinheit 1 übermittelt.

Vor dem Übertragen des Sicherheitsmerkmals kann dieses mit einem dem mobilem Endgerät 4 und der dezentralen Datenempfangseinheit 1 bekannten Transportschlüssel verschlüsselt werden. Dieser Transportschlüssel kann in der zentralen Datenverarbeitungseinheit 7 erzeugt und an das mobile Endgerät 4 gesendet werden. Dabei wird der Transportschlüssel verschlüsselt mit dem Freigabeschlüssel und unverschlüsselt übermittelt. Das mobile Endgerät 4 verschlüsselt mit Hilfe des unverschlüsselten Transportschlüssels das mindestens eine Sicherheitsmerkmal und überträgt das verschlüsselte Sicherheitsmerkmal zur dezentralen Datenempfangseinheit 1 zusammen mit dem verschlüsselten Transportschlüssel. Die dezentrale Datenempfangseinheit 1 entschlüsselt den Transportschlüssel mit Hilfe des Freigabeschlüssels und nutzt dann den entschlüsselten Transportschlüssel zur Entschlüsselung des mindestens einen individuellen Sicherheitsmerkmals.

Die dezentrale Datenempfangseinheit 1 ist nun in der Lage mit dem dort sicher hinterlegten Freigabeschlüssel und dem im Zusammenhang mit der Freigabeanforderung erhaltenen mindestens einen individuellen Sicherheitsmerkmal den Freigabe-Datensatz zu entschlüsseln, zu verifizieren und das darin enthaltene mindestens eine Freigabekriterium auszulesen. Dieses mindestens eine Freigabekriterium kann dann mit jeweils entsprechenden Freigabekriterien in der dezentrale Datenempfangseinheit 1 verglichen werden, um bei erfolgreicher Überprüfung die angeforderte Funktion freizugeben. Hierzu kann bspw. eine Übereinstimmung der aktuellen Uhrzeit mit einer Freigabe-Zeitinformation und/oder die Übereinstimmung einer Ortsinformation mit der räumlichen Lage der dezentralen Datenempfangseinheit 1 ausgewertet werden.

Es ist weiterhin erkennbar, dass die dezentrale Datenempfangseinheit 1 optional zusätzlich in bekannter Weise mit einer per se sicheren Transponderkarte 9 drahtlos zur Freigabe angesteuert werden kann. Das dort hinterlegte Sicherheitsmerkmal ist per se sicher, da es in einem sicheren Bereich der Transponderkarte 9 abgespeichert und der Transponderkarte 9 fest zugeordnet ist. Die Transponderkarte 9 übermittelt die dort hinterlegten Daten über RFID bzw. NFC an die dezentrale Datenempfangseinheit.

Mit Hilfe des mobilen Endgerätes 4 wird ein zusätzlicher Kanal zur Ansteuerung der dezentralen Datenempfangseinheit 1 über beispielsweise die RFID-Kommunikation mit Hilfe einer Transponderkarte 9 hinaus bereitgestellt.

Der drahtlose Kommunikationskanal 3 kann ebenso eine Nahfeldkommunikation NFC unterstützen. Denkbar ist alternativ oder zusätzlich hierzu eine Datenübertragung im Nahbereich z.B. nach dem BLE-Standard (Bluetooth-Low-Energy-Standard), WLAN-Standard (Wireless Local Area Network-Standard), 5G-Standard und dergleichen.

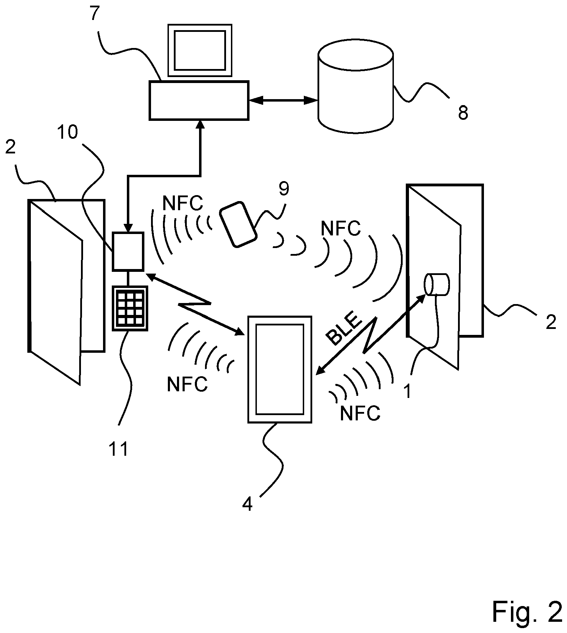

Figur 2 zeigt eine Skizze einer erweiterten Ausführungsform der Funktionsfreigabeeinrichtung aus Figur 1. Dort ist eine Nahfelddatenübertragungseinheit 10 mit der zentralen Datenverarbeitungseinheit 7 verbunden, die einerseits in Kommunikationsverbindung mit einem Transponder 9 und dem mobilen Endgerät 4 steht. Die Nahfelddatenübertragungseinheit 10 ist zur Aktualisierung der Transponder 9 eingerichtet.

Der Transponder 9 speichert den verschlüsselten Freigabe-Datensatz von der zentralen Datenverarbeitungseinheit 7 und sendet dann diese über RFID bzw. NFC an die dezentrale Datenempfangseinheit 1.

Alternativ kann zur Nutzungsfreigabe von Funktionen von einem mobilen Endgerät 4 eines Nutzers ein Freigabekriterium bei der zentralen Datenverarbeitungseinheit 7 angefordert werden. Dieses wird dann in der vorher beschriebenen verschlüsselten Weise als Freigabe-Datensatz über die Nahfelddatenübertragungseinheit 10 und an das mobile Endgerät 4 übertragen.

Der Transponder 9 kann an der Nahfelddatenübertragungseinheit 10 aktualisiert werden, wenn der Benutzer die Transponderkarte 8 in den Nahbereich der Nahfelddatenübertragungseinheit 10 bringt. Die drahtlose Kommunikation kann hierzu nach einem NFC-Standard erfolgen. Bei dem Aktualisierungsvorgang können der Freigabe-Datensatz verschlüsselt übertragen werden und/oder die Gültigkeitsdauer der Transponders 9.

Anschließend kann im Falle einer Türschließfunktion nicht nur die mit der Nahfelddatenübertragungseinheit 10 gesicherte Tür 2 mit Hilfe der Transponderkarte 9 oder dem mobilen Endgerät 4 geöffnet werden, sondern auch andere, nicht online an die Datenverarbeitungseinheit 7 angeschlossene weitere Türen 2. Diese können dann mit Hilfe einer Übertragung von Freigabe-Datensätzen von der Transponderkarte 9 oder dem mobilen Endgerät 4 an andere dezentrale Datenempfangseinheiten 1, die keine online Kommunikationsverbindung mit der Nahfelddatenübertragungseinheit 10 oder der zentralen Datenverarbeitungseinheit 7 haben, geöffnet werden.

Für die Eingabe und Übermittlung eines individuellen Sicherheitsmerkmals kann ein Lesegerät 11 mit der Nahfelddatenübertragungseinheit 10 oder mit einer dezentralen Datenempfangseinheit 1 verbunden sein. Der Nutzer kann über das Lesegerät 11 ein individuelles Sicherheitsmerkmal eingeben bzw. erfassen lassen.

Als individuelles Sicherheitsmerkmal ist beispielsweise eine persönliche Identifikationsnummer (PIN) geeignet, die über eine Tastatur des Lesegerätes 11 eingegeben werden kann. Die Eingabe über das Lesegerät kann genutzt werden, um die persönliche Identifikationsnummer (PIN) zusammen mit einer Freigabeanforderung an die zentrale Datenverarbeitungseinheit 7 zu übermitteln. Sie kann aber auch später genutzt werden, um nach Erhalt eines Freigabe-Datensatzes von der zentralen Datenverarbeitungseinheit 7 und Übermittlung an eine ausgewählte dezentrale Datenempfangseinheit 1 die persönliche Identifikationsnummer (PIN) zu erfassen und an die ausgewählte dezentrale Datenempfangseinheit 1 zu übermitteln.

Als individuelles Sicherheitsmerkmal ist auch ein biometrischer Code eines Nutzers geeignet. Zur Freigabe der Nutzung einer Funktion wird der biometrische Code z.B. mit der Leseeinheit 11 erfasst und in einem ersten Schritt an die zentrale Datenverarbeitungseinheit 7 übertragen. In einem zweiten Schritt wird der biometrische Code bei einer konkreten Freigabeanforderung für die Nutzung einer Funktion nochmals mit der Leseeinheit 11 erfasst und an die dezentrale Datenempfangseinheit 1 übertragen.

Die Leseeinheit 11 kann somit beispielsweise eine Eingabetastatur und/oder eine Scaneinheit für biometrische Merkmale haben. Hierzu eignet sich beispielsweise ein Fingerprintsensor zur Aufnahme des Papillarmusters der Finger, um hieraus die Minuzien zur Bildung des Transportschlüssels zu nutzen. Denkbar ist aber auch eine Nutzung von die Iris- und Retinastruktur des Nutzers repräsentierenden Daten, von das Gesicht des Nutzers charakterisierenden Daten oder dergleichen.

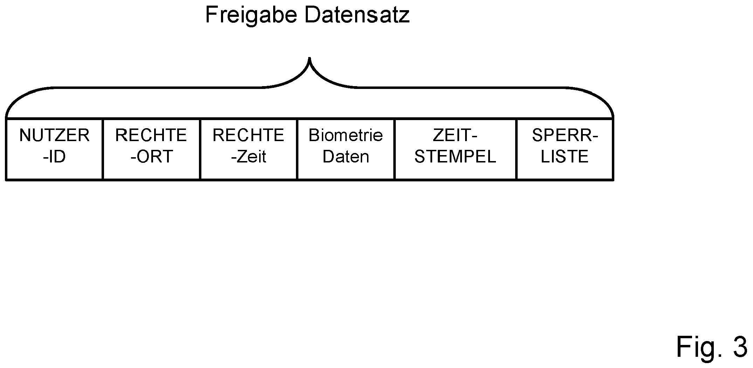

Figur 3 zeigt eine Skizze einer beispielhaften Datenstruktur eines Freigabe-Datensatzes mit dem darin enthaltenen verschlüsselten Freigabekriterien zur Nutzungsfreigabe für eine Funktion. Dieser Freigabe-Datensatze wird mit Hilfe eines Freigabeschlüssels verschlüsselt. Dabei gehen mindestens ein Sicherheitsmerkmal in die Verschlüsslung mit ein ohne selber Bestandteil des Freigabe-Datensatzes zu sein. Als Freigabekriterien können beispielsweise eine Nutzer-Identifikationsnummer (NUTZER-ID), Ortsrechte (RECHTE-Ort) mit einer Definition von zur Nutzung der Funktion zugelassenen Ortsbereichen, Zeitrechte (RECHTE-Zeit) zur Begrenzung der Nutzung einer Funktion auf bestimmte Zeiten bzw. Zeitbereiche, oder Biometrie-Daten zu Überprüfung dieser an der dezentralen Datenempfangseinheit hinterlegt sein.

Die Gültigkeitsdauer des Freigabe-Datensatzes kann mit Hilfe eines ebenso optionalen Zeitstempels begrenzt werden. Damit kann die Missbrauchsgefahr weiter reduziert werden, da nach Ablauf der gewählten Gültigkeitsdauer alle Rechte im Freigabe-Datensatz verfallen, bis von der zentralen Datenverarbeitungseinheit eine neue Gültigkeitsdauer erteilt wird.

Zusätzlich kann eine Sperrliste enthalten sein, die eine Liste für den Zugang gesperrter Nutzer enthält. Mit Hilfe der Sperrliste in dem Datensatz gelingt es die dezentralen Schließeinheiten 1 durch die Übertragung des Datensatzes an die dezentralen Schließeinheiten 1 mit der Zeit entsprechend zu aktualisieren.

Dieser Freigabe-Datensatz bzw. die darin enthaltenen Daten werden durch Kombination mindestens eines individuelle Sicherheitsmerkmals und eines Freigabeschlüssels, welcher in der zentralen Datenverarbeitungseinheit 7 und in den dezentralen Schließeinheiten 1 sicher hinterlegt ist, und ggf. weiterer Daten verschlüsselt. Der Freigabeschlüssel ist hierbei ein individueller Schlüssel der zugeordneten dezentralen Datenempfangseinheit 1 bzw. einer der dezentralen Datenempfangseinheit 1 zugeordneten Funktion.

Mehrere solcher Freigabe-Datensätze können in einem Paket bzw. Pulk zusammen übertragen werden. Dabei kann jeder Freigabe-Datensatz jeweils für eine zugeordnete dezentrale Datenempfangseinheit 1 vorgesehen und nur von dieser entschlüsselt werden. Die Freigabe-Datensätze können in einem offenen Header entsprechende Adresskennungen haben, mit denen die dezentralen Datenempfangseinheit 1 erkennen können, ob ein Freigabe-Datensatz für sie bestimmt ist. Denkbar ist auch, dass mehrere Freigabe-Datensätze eines Pulks für die gleiche dezentrale Datenempfangseinheit 1 bestimmt sind, jedoch unterschiedliche Daten zur Freigabe unterschiedlicher Funktionen beinhalten.

Für den Fall, dass ein Freigabe-Datensatz bzw. das Transportpaket während des Transports von der zentralen Datenverarbeitungseinheit 7 abgefangen wurde, kann dieses nur dann missbraucht werden, wenn bei der Übertragung des Datensatzes an die dezentrale Schließeinheit 1 auch das genutzte mindestens eine individuelle Sicherheitsmerkmal bekannt und mit der Freigabeanforderung an die ausgewählte dezentrale Datenempfangseinheit 1 übermittelt wird. Nur dann ist die dezentrale Datenempfangseinheit 1 in der Lage den Freigabe-Datensatz zu entschlüsseln und das darin enthaltene mindestens eine Freigabekriterium auszulesen und für die Nutzungsfreigabe einer Funktion zu überprüfen. Eine weitere Voraussetzung ist, dass der abgefangene Freigabe-Datensatz dabei auch an die korrekt zugeordnete dezentrale Datenempfangseinheit 1 übermittelt wird, da nur diese den individuellen Freigabeschlüssel dieser dezentralen Datenempfangseinheit 1 hat.

Auch wenn das mobile Endgerät 4 und der Transportweg nicht sicher ist, kann der Freigabe-Datensatz, der mit Hilfe einer Kombination von individuellem Sicherheitsmerkmal des Nutzers und individuellem Freigabeschlüssel der dezentralen Datenempfangseinheit 1 verschlüsselt wurde, nicht mehr missbraucht werden.

Die zentrale Datenverarbeitungseinheit 7 (Cloud) kann zusätzlich noch eine individuelle Kennung des mobilen Endgerätes 4 empfangen, wie beispielsweise eine Identifikationsnummer des mobilen Endgerätes (IMEI) des Nutzers, eine Identifikationsnummer (IMSI) des Teilnehmer-Identitätsmoduls (SIM) des mobilen Endgerätes 4 des Nutzers, die Telefonnummer des mobilen Endgerätes 4 des Nutzers, die UID-Nummer des Teilnehmer-Identitätsmoduls (SIM) des Nutzers, die integrierte SIM-Karten-Identifizierer-Kennung (ICC-ID) des Teilnehmer-Identitätsmoduls (SIM) des Nutzers, eine Identifizierer-Kennung eines auf dem mobilen Endgerät 4 zur Ausführung des Schritts d) ablaufenden Computerprogramms (IdentifierForVendor) oder eine Instanzen-Kennung (Instance ID). Diese Daten können auch als Sicherheitsmerkmal genutzt werden.

Im Zusammenhang mit der Übertragung eines Freigabe-Datensatzes von einem mobilen Endgerät 4 an eine dezentrale Datenempfangseinheit 1 können diese Informationen des anfordernden mobilen Endgerätes 4 mit übertragen werden. Die Funktionsfreigabe kann damit so gesteuert werden, dass eine Freigabe nur dann erfolgt, wenn das die Funktionsfreigabe beider zentralen Datenverarbeitungseinheit 7 anfordernde mobile Endgerät 7 identisch zu dem die Funktionsfreigabe bei einer dezentralen Datenempfangseinheit 1 anfordernden mobilen Endgerät 4 ist. Die Identität wird durch die o.g. Sicherheitsmerkmale festgestellt, welche sich auf eineindeutige Kennungen des mobilen Endgerätes 4 bzw. eines dort installierten Computerprogramms beziehen.

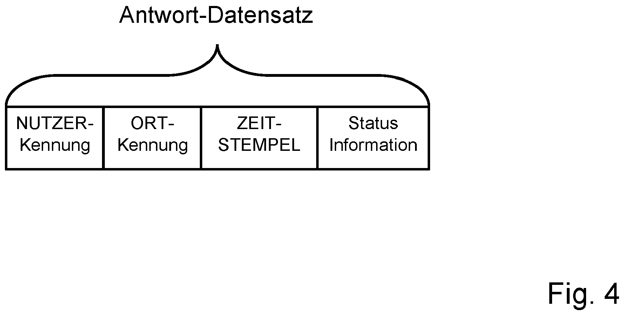

Figur 4 zeigt eine Skizze einer beispielhaften Datenstruktur eines Antwort-Datensatzes mit dem darin enthaltenen Informationen. Dieser Antwort-Datensatz kann mit einem der dezentrale Datenempfangseinheit 1 und der zentralen Datenverarbeitungseinheit 7 bekannten Schlüssel, wie zum Beispiel dem Freigabeschlüssel, verschlüsselt werden. Der Antwort-Datensatz kann dabei eine Kennung des Nutzers, wie beispielsweise eine Nutzer ID und/oder eine Kennung der dezentralen Datenempfangseinheit und/oder einen Zeitstempel und/oder Statusinformationen beinhalten. Statusinformationen können beispielsweise Information wie ein niedriger Batteriestand, eine blockierte Tür, Zutritt gewährt und/oder Zutritt verweigert sein.

Diese Statusinformationen werden zur zentralen Datenverarbeitungseinheit 7 übertragen und dort als Bestätigung der Ausführung des Freigabe-Datensatzes gespeichert.

## Patentansprüche

1. Verfahren zur Nutzungsfreigabe von Funktionen mindestens einer dezentralen Datenempfangseinheit (1) für einen Nutzer mittels einer zentralen Datenverarbeitungseinheit (7) und der mindestens einen ausgewählten dezentralen Datenempfangseinheit (1), wobei die dezentrale Datenempfangseinheit (1) zum Empfangen eines verschlüsselten Freigabe-Datensatzes von einem Nutzer und zur Nutzungsfreigabe bei Übereinstimmung von mindestens einem in dem Freigabe-Datensatz enthaltenen Freigabekriterium mit jeweils einem entsprechenden, in der dezentralen Datenempfangseinheit (1) abgespeicherten Freigabekriterium eingerichtet ist,
**gekennzeichnet durch:**
a) Erzeugen eines verschlüsselten Freigabe-Datensatzes durch Verschlüsseln mindestens eines Freigabekriteriums durch die zentrale Datenverarbeitungseinheit (7) mit einem der zentralen Datenverarbeitungseinheit (7) und der ausgewählten dezentralen Datenempfangseinheit (1) bekannten Freigabeschlüssel sowie einem der zentralen Datenverarbeitungseinheit (7) bekannten individuellen Sicherheitsmerkmal des Nutzers;
b) Übertragen des verschlüsselten Freigabe-Datensatzes von der zentralen Datenverarbeitungseinheit (7) an das mobile Endgerät (4);
c) Übertragen des Freigabe-Datensatzes vom mobilen Endgerät (4) an die ausgewählte dezentrale Datenempfangseinheit (1) zusammen mit einem individuellen Sicherheitsmerkmal des Nutzers;
d) Entschlüsseln des mit der Kombination aus Freigabeschlüssel und individuellem Sicherheitsmerkmal verschlüsselten Freigabe-Datensatzes in der dezentralen Datenempfangseinheit (1) und
e) Freigeben der Nutzung einer Funktion bei erfolgreicher Überprüfung des im entschlüsselten Freigabe-Datensatz enthaltenen Freigabekriteriums.

2. Verfahren nach Anspruch 1, **dadurch gekennzeichnet, dass** das die Übertragung des individuellen Sicherheitsmerkmals im Schritt c) unabhängig von der Übertragung des unveränderten Freigabe-Datensatzes erfolgt.

3. Verfahren nach einem der vorhergehenden Ansprüche, **dadurch gekennzeichnet, dass** nach dem erfolgreichen Entschlüsseln des Freigabe-Datensatzes die Überprüfung einer Übereinstimmung des mindestens einen in dem Freigabe-Datensatz enthaltenen Freigabekriterium erfolgt, welche bei erfolgreicher Überprüfung zur Freigabe der Nutzung einer Funktion führt.

4. Verfahren nach einem der vorhergehenden Ansprüche, **dadurch gekennzeichnet, dass** das mindestens ein Freigabekriterium eine Zeitinformation umfasst, welche die Nutzungsfreigabe einer Funktion auf einen vorgegebenen Zeitraum beschränkt und/oder eine Ortsinformation umfasst, welche die Nutzungsfreigabe auf mindestens einen Ortsbereich beschränkt, und/oder ein individuelles Sicherheitsmerkmal des Nutzers umfasst und das Freigeben der Nutzung einer Funktion im Schritt e) nur dann erfolgt, wenn das in dem Freigabe-Datensatz enthaltene individuelle Sicherheitsmerkmal mit dem im Schritt c) von dem Nutzer übertragenen individuellen Sicherheitsmerkmal übereinstimmt.

5. Verfahren nach einem der vorhergehenden Ansprüche, **dadurch gekennzeichnet, dass** die dezentrale Datenempfangseinheit (1) ein Teil einer Schließgruppe ist und die Ortsinformation mindestens eine Kennung für die der Schließgruppe zugeordnete dezentrale Schließeinheit beinhaltet.

6. Verfahren nach einem der vorhergehenden Ansprüche, **dadurch gekennzeichnet, dass** das Übertragen des mindestens einen Sicherheitsmerkmals von dem mobilen Endgerät (4) an die dezentrale Datenempfangseinheit (1), mit Hilfe von einem, dem mobilen Endgerät (4) und der dezentraler Datenempfangseinheit (1) bekannten Transportschlüssels verschlüsselt wird.

7. Verfahren nach Anspruch 6, **dadurch gekennzeichnet, dass** der Transportschlüssel in dem Freigabe-Datensatz in Schritt a) zusammen mit dem mindestens einen Freigabekriterium verschlüsselt und zusätzlich unverschlüsselt zum mobilen Endgerät (4) in Schritt b) übermittelt wird.

8. Verfahren nach einem der vorhergehenden Ansprüche, **dadurch gekennzeichnet, dass** ein individuelles Sicherheitsmerkmal eine persönliche Identifikationsnummer (PIN), ein biometrischer Code, insbesondere Minuzien der Finger, oder die Iris- und Retinastruktur ist, und/oder eine Identifikationsnummer des mobilen Endgerätes (IMEI) des Nutzers, eine Identifikationsnummer (IMSI) des Teilnehmer-Identitätsmoduls (SIM) des mobilen Endgerätes (4) des Nutzers, die Telefonnummer des mobilen Endgerätes (4) des Nutzers, die UID-Nummer des Teilnehmer-Identitätsmoduls (SIM) des Nutzers, die integrierte SIM-Karten-Identifizierer-Kennung (ICC-ID) des Teilnehmer-Identitätsmoduls (SIM) des Nutzers, eine Identifizierer-Kennung eines auf dem mobilen Endgerät (4) zur Ausführung des Schritts c) ablaufenden Computerprogramms (IdentifierForVendor) oder eine Instanzen-Kennung (Instance ID) ist.

9. Verfahren nach einem der vorhergehenden Ansprüche, **dadurch gekennzeichnet, dass** auf ein Freigabe-Datensatz mindestens ein Antwort-Datensatz durch die dezentrale Datenempfangseinheit (1) erzeugt und über das mobile Endgerät (4) an die zentrale Datenverarbeitungseinheit (7) übermittelt wird, wobei der Antwort-Datensatz, mit einem der dezentrale Datenempfangs und der zentralen Datenverarbeitungseinheit (7) bekannten Schlüssel, wie zum Beispiel dem Freigabeschlüssel, verschlüsselt sein kann.

10. Verfahren nach Anspruch 9, **dadurch gekennzeichnet, dass** die Antwort eine Kennung des Nutzers und/oder Kennung der dezentralen Datenempfangseinheit (1) und/oder einen Zeitstempel und/oder Statusinformationen beinhalten kann.

11. Verfahren nach einem der vorhergehenden Ansprüche, **dadurch gekennzeichnet, dass** das Übertragen des Freigabe-Datensatzes an die ausgewählte dezentrale Datenempfangseinheit (1) durch Speicherung des verschlüsselten Freigabe-Datensatzes auf ein mobiles Endgerät (4), das beispielsweise eine Transponderkarte (9) ist, durch eine Nahfelddaten-Übertragungseinheit (10) erfolgt.

12. Funktionsfreigabeeinrichtung mit einer zentralen Datenverarbeitungseinheit (7), einem Computerprogramm zur Ausführung auf einem mobilen Endgerät (4) und mit dezentralen Datenempfangseinheit (1), **dadurch gekennzeichnet, dass** die Funktionsfreigabeeinrichtung zur Durchführung des Verfahrens nach einem der Ansprüche 1 bis 11 ausgebildet ist.

13. Computerprogramm mit Programmcodemitteln zur Durchführung der Schritte des Verfahrens nach Anspruch 1:
A) Empfangen eines verschlüsselten Freigabe-Datensatzes von der zentralen Datenverarbeitungseinheit (7) an den Nutzer, wobei der Freigabe-Datensatz mindestens ein Freigabekriterium enthält, welches mit einem der zentralen Datenverarbeitungseinheit (7) und der ausgewählten dezentralen Datenempfangseinheit (1) bekannten Freigabeschlüssel der ausgewählten dezentralen Datenempfangseinheit (1) und einem der zentralen Datenverarbeitungseinheit (7) bekannten individuellem Sicherheitsmerkmal des Nutzers verschlüsselt ist,
B) Übertragen des verschlüsselten Freigabe-Datensatzes von dem mobilen Endgerät (4) des Nutzers an die ausgewählte dezentrale Datenempfangseinheit (1) zusammen mit mindestens einem individuellen Sicherheitsmerkmal des Nutzers,
wenn das Computerprogramm auf einem Prozessor eines mobilen Endgerätes (4) ausgeführt wird.

14. Computerprogramm mit Programmcodemitteln zur Durchführung der Schritte des Verfahrens nach Anspruch 6 und 7:
A) Empfangen eines Transportschlüssels und eines verschlüsselten Freigabe-Datensatzes von der zentralen Datenverarbeitungseinheit (7) an den Nutzer, wobei der Freigabe-Datensatz mindestens ein Freigabekriterium enthält, welches mit einem der zentralen Datenverarbeitungseinheit (7) und der ausgewählten dezentralen Datenempfangseinheit (1) bekannten Freigabeschlüssel der ausgewählten dezentralen Datenempfangseinheit (1) und einem der zentralen Datenverarbeitungseinheit (7) bekannten individuellem Sicherheitsmerkmal des Nutzers verschlüsselt ist,
B) Eingeben des individuellen Sicherheitsmerkmal des Nutzers in dem mobilen Endgerät (4),
C) Übertragen des verschlüsselten Freigabe-Datensatzes von dem mobilen Endgerät (4) des Nutzers an die ausgewählte dezentrale Datenempfangseinheit (1) zusammen mit mindestens einem mit dem Transportschlüssel verschlüsselten individuellen Sicherheitsmerkmal des Nutzers,
wenn das Computerprogramm auf einem Prozessor eines mobilen Endgerätes (4) ausgeführt wird.

15. Dezentrale Datenempfangseinheit (1) mit einer Funkempfangseinheit, einem Datenspeicher, einem Prozessor und einer mechanischen Verriegelungs- und Entriegelungseinheit, **dadurch gekennzeichnet, dass** die dezentrale Schließeinheit (1) zum
- Empfangen eines verschlüsselten Freigabe-Datensatzes von einem mobilen Endgerät (4) sowie mindestens eines individuellen Sicherheitsmerkmals des Nutzers;
- Entschlüsseln des mit einer Kombination aus einem Freigabeschlüssel und dem mindestens einen individuellen Sicherheitsmerkmal verschlüsselten Freigabe-Datensatzes in der ausgewählten dezentralen Datenempfangseinheit (1);
- Überprüfen einer Übereinstimmung des mindestens einen in dem Freigabe-Datensatz enthaltenen Freigabekriterium mit einem jeweils entsprechenden Freigabekriterium; und
- Freigeben der Nutzung einer Funktion bei erfolgreicher Überprüfung eingerichtet ist.

16. Dezentrale Datenempfangseinheit (1) nach Anspruch 15, **dadurch gekennzeichnet, dass** die dezentrale Datenempfangseinheit (1) mit einer zur Erfassung eines individuellen Sicherheitsmerkmals des Nutzers eingerichteten Identifikationserfassungseinheit, beispielsweise einem Fingerabdrucksensor, einem Tastaturfeld für eine Eingabe eines persönlichen Identifikationscodes oder einem Irissensor gekoppelt ist.

17. Dezentrale Datenempfangseinheit (1) nach einem der Ansprüche 15 oder 16, **dadurch gekennzeichnet, dass** die dezentrale Datenempfangseinheit (1) ein Teil einer Schließeinheit ist.
